# EUROPÄISCHE PATENTSCHRIFT

(11) **EP 1 768 881 B1**
(45) Veröffentlichungstag und Bekanntmachung des Hinweises auf die Patenterteilung: **16.09.2009**
(21) Anmeldenummer: 05764050.0
(22) Anmeldetag: 08.07.2005
(51) Int. Cl.: B60T 8/00, B60T 7/12

(54) **VERFAHREN ZUR HERSTELLUNG EINER BREMSBEREITSCHAFTSFUNKTION**
METHOD FOR PRODUCTION OF A BRAKE STAND-BY FUNCTION
PROCEDE POUR REALISER UNE FONCTION DE PRE-FREINAGE

(30) Priorität: 21.07.2004 DE 102004035378
(43) Veröffentlichungstag der Anmeldung: 04.04.2007
(73) Patentinhaber: Continental Teves AG & Co. oHG, 60488 Frankfurt am Main (DE)
(72) Erfinder: GROITZSCH, Stephan, 69469 Weinheim (DE); CRESS, Torsten, 36381 Schlüchtern (DE)
(86) Internationale Anmeldenummer: PCT/EP2005/053287
(87) Internationale Veröffentlichungsnummer: WO 2006/008248

(56) Entgegenhaltungen:
- EP-A- 1 424 254
- DE-A1- 19 629 229
- DE-C1- 4 413 172

## Beschreibung

Die Erfindung betrifft ein Verfahren zum Verändern des Auslöseschwellenwertes einer Bremsbereitschaftsfunktion einer Fahrzeugbremse.

Die Erfindung geht von einer unter dem Begriff "Bremsassistent" bekannten Bremseinrichtung aus. Der Ursprung für die Schaffung des Bremsassistenten ist die empirische Beobachtung, dass ungeübte Fahrer im Falle einer Notbremsung nicht stark genug auf das Bremspedal treten, um tatsächlich die maximal mögliche Bremswirkung zu erzielen.

Der Bremsassistent schafft hierfür Abhilfe, indem er beim Erkennen einer Notbremssituation einen größeren Bremsdruck aufbaut, als es der Stellung des Bremspedals entspricht.

Bei einer Weiterentwicklung des Bremsassistenten wird beim Erkennen einer Notbremssituation bereits bevor der Fahrer das Bremspedal betätigt ein Bremsdruck in den Radbremsen aufgebaut. Der Vorteil bei diesem System ist, dass sich dadurch die Bremsbeläge oder Bremsbacken an die Bremsscheiben bzw. Bremstrommeln anlegen.

Dabei wird zwar noch keine nennenswerte Bremswirkung erzielt, aber die Ansprechzeit der Bremse wird verkürzt, weil das Lüftspiel der Bremsbeläge oder Bremsbacken schon vor dem Betätigen des Bremspedals überwunden ist. Diese Funktion des Bremsassistenten wird auch als Bremsbereitschaftsfunktion bezeichnet.

Ein wesentlicher Gesichtspunkt für das gute Funktionieren der Bremsbereitschaftsfunktion ist das zuverlässige Erkennen einer Notbremssituation.

Bei einem aus der gattungsgemäßen DE 44 13 172 C1 bekannten Verfahren zeigt ein Überschreiten eines Schwellenwertes für die Betätigungsgeschwindigkeit des Bremspedals an, dass eine Notbremssituation vorliegt. Daraufhin wird eine aktive Bremsung mit maximalem Bremsdruck ausgeführt. Bei diesem Verfahren wird die Rücknahmegeschwindigkeit des Gaspedals ausgewertet, um den Schwellenwert für die Betätigungsgeschwindigkeit des Bremspedals anzupassen.

Darüber hinaus ist es aus der DE 196 29 229 A1 bekannt, einen Bremsdruck in den Radbremsen zu erzeugen, um das Lüftspiel zu beseitigen, wenn die Rücknahmegeschwindigkeit des Gaspedals einen vorgegebenen Schwellenwert überschreitet.

Bei den bekannten Verfahren und Vorrichtungen kann jedoch die Schwierigkeit auftreten, dass bei sportlichen Fahrern, die schnell schalten, eine Notbremssituation nicht mehr zuverlässig von einem Schaltvorgang unterscheidbar ist. Das kann dazu führen, dass bei sportlicher Fahrweise und schnellen Hochschaltvorgängen die Bremsbereitschaftsfunktion ausgelöst und eine geringfügige Verzögerung auftritt. Das widerspricht jedoch dem Wunsch des sportlichen Fahrers, eine möglichst hohe Beschleunigung zu erzielen.

Hiervon ausgehend ist es deshalb eine Aufgabe der Erfindung, die beschriebene Schwierigkeit zu überwinden.

Diese Aufgabe wird durch ein Verfahren zum Verändern des Auslöseschwellenwertes einer Bremsbereitschaftsfunktion einer Fahrzeugbremse gelöst.

Erfindungsgemäß wird ein Verfahren zum Verändern des Auslöseschwellenwertes einer Bremsbereitschaftsfunktion einer Fahrzeugbremse vorgeschlagen, wobei die Bremsbereitschaftsfunktion ohne Betätigung eines Bremspedals einen Bremsdruck in Radbremsen erzeugt. Das erfindungsgemäße Verfahren zeichnet sich dadurch aus, dass ein Auslöseschwellenwert für die Bremsbereitschaftsfunktion durch folgende Schritte ermittelt wird:
a) Feststellen einer mittleren Rücknahmegeschwindigkeit eines Fahrpedals; und
b) Verändern des Auslöseschwellenwertes für die Bremsbereitschaftsfunktion, abhängig von der festgestellten mittleren Rücknahmegeschwindigkeit des Fahrpedals.

Bei einer Weiterbildung der Erfindung wird der Auslöseschwellenwert heraufgesetzt, wenn die mittlere Rücknahmegeschwindigkeit größer als ein erster Grenzwert ist. In ganz entsprechender Weise wird der Auslöseschwellenwert herabgesetzt, wenn die mittlere Geschwindigkeit kleiner als ein zweiter Grenzwert ist.

Bei einer alternativen Ausführungsform der Erfindung wird der Auslöseschwellenwert für die Bremsbereitschaftsfunktion als Funktion der Fahrpedalstellung ermittelt. Konkret werden folgende Schritte ausgeführt:
a) Wiederholtes Messen eines Positionswertes, welcher der Stellung eines Fahrpedals entspricht;
b) Vergleichen eines aktuell gemessenen Positionswertes des Fahrpedals mit einem zeitlich vorher gemessenen Positionswert;
c) Festlegen eines bestimmten Positionswertes als Fahrpedalausgangswert, wobei die Festlegung nach vorgegebenen Regeln erfolgt und
d) Verändern des Auslöseschwellenwertes für die Bremsbereitschaftsfunktion, abhängig von dem Fahrpedalausgangswert.

Zweckmäßigerweise kann das wiederholte Messen regelmäßig erfolgen.

Bei einer Weiterbildung der Erfindung wird als Fahrpedalausgangswert ein aktuell gemessener Positionswert festgelegt, wenn der aktuell gemessene Positionswert größer als der unmittelbar vorher gemessene Positionswert ist.

Bei einer anderen Weiterbildung der Erfindung wird als Fahrpedalausgangswert ein aktuell gemessener Positionswert festgelegt, wenn der aktuell gemessene Positionswert größer als ein zwei oder mehr Messungen zuvor gemessener Positionswert ist. In einer Abwandlung dieser Weiterbildung kann es vorgesehen sein, dass der aktuell gemessene Positionswert um eine vorgegebene Differenz größer als ein zwei oder mehr Messungen zuvor gemessener Positionswert ist, um als Fahrpedalausgangswert festgelegt zu werden.

Bei einer anderen Weiterbildung der Erfindung wird als Fahrpedalausgangswert ein aktuell gemessener Positionswert festgelegt, wenn die Differenz, die der aktuell gemessene Positionswert kleiner ist als der ein, zwei oder mehr Messungen zuvor gemessene Positionswert und einen vorgegebenen Schwell-wert unterschreitet.

Zweckmäßigerweise kann der Fahrpedalausgangswert auf einen vorbestimmten Standardwert zurückgesetzt werden, wenn das Fahrpedal die Leerlaufstellung erreicht.

Die Erfindung wird nunmehr anhand eines Ausführungsbeispieles im Einzelnen erläutert. Zum besseren Verständnis der Erfindung sind in der Zeichnung eine Vorrichtung zur Ausführung des erfindungsgemäßen Verfahrens sowie einige wesentliche funktionelle Zusammenhänge dargestellt.

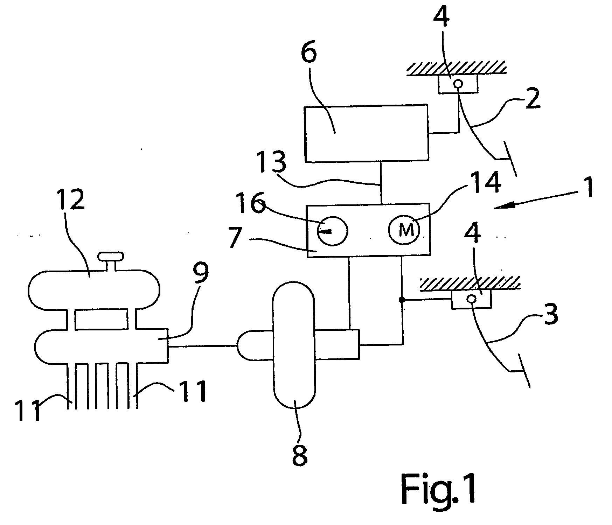

Fig. 1 zeigt eine schematische Darstellung einer Vorrichtung zur Durchführung des erfindungsgemäßen Verfahrens.

Die in der Fig. 1 dargestellte Vorrichtung wird als Ganzes mit dem Bezugszeichen 1 bezeichnet. Die Vorrichtung umfasst ein Fahrpedal 2 sowie ein Bremspedal 3. Die Verstellwege sowie die Verstellgeschwindigkeiten des Fahrpedals 2 und vorzugsweise auch des Bremspedals 3 werden von zugeordneten Sensoren 4 erfasst.

Mit dem Fahrpedal 2 werden auf elektrischem Wege Fahrbefehle an eine Motorsteuerung 6 übermittelt, die entsprechend der Fahrbefehle ein Drehmoment von einem Motor anfordert. Eine solche Motorsteuerung ist im Stand der Technik z.B. unter dem Schlagwort "Drive-by-Wire" bekannt und wird deshalb an dieser Stelle nicht weiter beschrieben.

Mit dem Bremspedal 3 werden Bremsbefehle an eine elektrohydraulische Steuereinheit 7 übermittelt, die entsprechend der Bremsbefehle des Fahrers für einen entsprechenden Bremsdruck in den Radbremsen des Fahrzeugs sorgt. Die elektrohydraulische Steuereinheit 7 ist ebenfalls im Stand der Technik als eine Komponente von so genannten "Brake-by-Wire" Bremssystemen bekannt.

Die elektrohydraulische Einheit 7 ist mit einem Bremskraftverstärker 8 signalmäßig verbunden. Gleichzeitig ist der Bremskraftverstärker auch mechanisch mit dem Bremspedal 3 verbunden. Der Bremskraftverstärker 8 überträgt eine mechanische Bewegung auf einen Hauptbremszylinder 9, in welchem ein hydraulischer Druck erzeugt wird, der über Bremsleitungen 11 in die Radbremsen übertragen wird, die in Fig. 1 nicht dargestellt sind. Mit dem Hauptbremszylinder 9 ist darüber hinaus ein Vorratsbehälter 12 für Bremsflüssigkeit strömungsmäßig verbunden. Ferner sind der Hauptbremszylinder 9 und/oder die Bremszylinder der Radbremsen in einer vorteilhaften Ausgestaltung der Erfindung mit einem in der Figur 2 nicht dargestellten Drucksensor ausgerüstet.

Schließlich ist zwischen der Motorsteuerung 6 und der elektrohydraulischen Einheit 7 eine signalmäßige Verbindung 13 vorgesehen, welche die Übertragung eines Signals ermöglicht, das die Bremsbereitschaftsfunktion auslöst.

Die elektrohydraulische Einheit 7 weist eine von einem Motor 14 angetriebene Pumpe 16 auf, die es gestattet, einen Bremsdruck zu erzeugen, ohne dass der Fahrer das Bremspedal 3 betätigt. Wenn die Bremsbereitschaftsfunktion von der elektrohydraulischen Einheit 7 ausgelöst wird, dann schaltet sich der Motor 14 ein und treibt die Pumpe 16 an, um einen ausreichenden Bremsdruck zu erzeugen, damit sich die Bremsbeläge oder Bremsbacken in den Radbremsen anlegen.

Zur Aktivierung der Bremsbereitschaftsfunktion wird die Rücknahmegeschwindigkeit des Fahrpedals von der elektrohydraulischen Einheit 7 überwacht. Überschreitet die Rücknahmegeschwindigkeit einen vorgegebenen Schwellenwert, so wird davon ausgegangen, dass eine Notbremssituation vorliegt, und die Bremsbereitschaftsfunktion wird ausgelöst, das heißt, in den Radbremsen wird ein geringer Bremsdruck erzeugt, um das Lüftspiel von Bremsbelägen bzw. Bremsbacken zu beseitigen.

Um den Fahrer bei einem Bremsvorgang nicht mit einem aus dem normalen Fahrzeugbetrieb unbekannten bzw. ungewohnten Bremsgefühl zu irritieren, ist es vorgesehen, dass der Motor 14 sofort abgeschaltet wird, sobald der Fahrer das Bremspedal 3 betätigt. Auf diese Weise wird erreicht, dass auf der einen Seite ein schnelleres Ansprechen der Bremse erreicht wird, während der Fahrer aber nicht gegen einen bereits im Bremssystem herrschenden Bremsdruck "tritt".

Die Betätigung des Bremspedals 3 durch den Fahrer wird dabei in einer Ausführungsform der Erfindung anhand der Signale des dem Bremspedal 3 zugeordneten Pedalwegsensors 4 erfasst.

In einer weiteren Ausführungsform der Erfindung ist es vorgesehen, den Bremsdruck innerhalb des Hauptbremszylinders 9 und/oder innerhalb der Bremszylinder der Radbremsen mittels des Drucksensors zu überwachen, um ein Einbremsen des Fahrers zu erkennen. Falls dabei bei aktivierter Bremsbereitschaftsfunktion, d.h. bei Vorliegen des durch die Bremsbereitschaftsfunktion aufgebauten Bremsdrucks, eine Erhöhung des Bremsdrucks um wenigstens einen vorgegebenen Schwellenwert ermittelt wird, wird eine Betätigung des Bremspedals 3 festgestellt und die Bremsbereitschaftsfunktion wird abgebrochen.

Ferner kann es vorgesehen sein, den Bremsdruckgradienten innerhalb des Hauptbremszylinders 9 und/oder innerhalb der Bremszylinder der Radbremsen zu überwachen, und eine Bremsenbetätigung des Fahrers dann festzustellen, wenn der Bremsdruckgradient bei aktivierter Bremsbereitschaftsfunktion einen vorgegebenen Schwellenwert überschreitet. Auf diese Weise kann ein Einbremsen des Fahrers besonders schnell erkannt werden.

Die erfindungsgemäß ausgestaltete Bremsbereitschaftsfunktion kann sowohl in Kombination mit einem Bremsassistenten eingesetzt werden, wie grundsätzlich beispielsweise aus der wie er grundsätzlich aus der deutschen Offenlegungsschrift DE 196 29 229 A1 bekannt ist. Es ist jedoch ebenfalls möglich, die Bremsbereitschaftsfunktion ohne einen Bremsassistenten zu realisieren.

Bei einer Kombination der Bremsbereitschaftsfunktion mit einem Bremsassistenten ist es vorgesehen, dass die Pumpe 16 bzw. der Motor 14 nach dem Beenden der Bremsbereitschaftsfunktion erneut angeschaltet wird, wenn eine Aktivierungsbedingung für den Bremsassistenten erfüllt ist.

Vorzugsweise wird der Bremsassistent dabei aktiviert, wenn bei der Betätigung des Bremspedals durch den Fahrer der Bremsdruck innerhalb des Hauptbremszylinders 9 einen vorgegebenen Schwellenwert überschreitet und/oder wenn der Bremsdruckgradient innerhalb des Hauptbremszylinders 9 einen vorgegebenen Schwellenwert überschreitet. Dabei werden vorzugsweise andere, insbesondere größere Schwellenwerte vorgegeben, als diejenigen, die für den Abbruch der Bremsbereitschaftsfunktion maßgeblich sind.

Somit erfolgt bei einer Kombination der Bremsbereitschaftsfunktion mit einem Bremsassistenten zunächst ein Abbruch der Bremsbereitschaftsfunktion, wenn der Bremsdruck und/oder der Bremsdruckgradient innerhalb des Hauptbremszylinders 9 einen ersten Schwellenwert überschreitet, wobei die Pumpe 16 bzw. der Motor 14 ausgeschaltet wird. Überschreitet der Bremsdruck und/oder der Bremsdruckgradient innerhalb des Hauptbremszylinders 9 nachfolgend einen zweiten, größeren Schwellenwert, wird der Bremsassistent aktiviert, wobei die Pumpe 16 bzw. der Motor 14 erneut angeschaltet werden.

Weiterhin ist es im Rahmen der vorliegenden Erfindung vorgesehen, dass die Bremsbereitschaftsfunktion nach einer vorgegeben Zeitdauer abgebrochen wird, wenn bei aktivierter Bremsbereitschaftsfunktion eine Betätigung des Bremspedals 3 unterbleibt, wie es beispielsweise bei Schaltvorgängen der Fall sein kann, bei denen die Bremsbereitschaftsfunktion aufgrund einer besonders hohen Gaspedalrücknahmegeschwindigkeit ausgelöst wird. Insgesamt ist es somit vorgesehen, dass die Bremsbereitschaftsfunktion abgebrochen wird, wenn eine mit der Aktivierung beginnende vorgegebene Zeitdauer abgelaufen ist oder wenn während dieser Zeitdauer eine Betätigung des Bremspedals 3 festgestellt wird.

## Patentansprüche

1. Verfahren zum Verändern des Auslöseschwellenwertes einer Bremsbereitschaftsfunktion einer Fahrzeugbremse, wobei die Bremsbereitschaftsfunktion ohne Betätigung eines Bremspedals (3) einen Bremsdruck in Radbremsen erzeugt, **dadurch gekennzeichnet, dass** ein Auslöseschwellenwert für die Bremsbereitschaftsfunktion durch folgende Schritte ermittelt wird:
a) Feststellen einer mittleren Rücknahmegeschwindigkeit eines Fahrpedals (2); und
b) Verändern des Auslöseschwellenwertes für die Bremsbereitschaftsfunktion, abhängig von der festgestellten mittleren Rücknahmegeschwindigkeit des Fahrpedals (2).

2. Verfahren nach Anspruch 1, **dadurch gekennzeichnet, dass** der Auslöseschwellenwert heraufgesetzt wird, wenn die mittlere Rücknahmegeschwindigkeit größer als ein erster Grenzwert ist.

3. Verfahren nach Anspruch 1, **dadurch gekennzeichnet, dass** der Auslöseschwellenwert herabgesetzt wird, wenn die mittlere Geschwindigkeit kleiner als ein zweiter Grenzwert ist.

4. Verfahren zum Verändern des Auslöseschwellenwertes einer Bremsbereitschaftsfunktion einer Fahrzeugbremse, wobei die Bremsbereitschaftsfunktion ohne Betätigung eines Bremspedals (3) einen Bremsdruck in Radbremsen erzeugt, **dadurch gekennzeichnet, dass** ein Auslöseschwellenwert für die Bremsbereitschaftsfunktion durch folgende Schritte ermittelt wird:
a) wiederholtes Messen eines Positionswertes, welcher der Stellung eines Fahrpedals entspricht;
b) Vergleichen eines aktuell gemessenen Positionswertes des Fahrpedals mit einem zeitlich vorher gemessenen Positionswert;
c) Festlegen eines bestimmten Positionswertes als Fahrpedalausgangswert, wobei die Festlegung nach vorgegebenen Regeln erfolgt; und
d) Verändern des Auslöseschwellenwertes für die Bremsbereitschaftsfunktion, abhängig von dem Fahrpedalausgangswert.

5. Verfahren nach Anspruch 4, **dadurch gekennzeichnet, dass** das wiederholte Messen regelmäßig erfolgt.

6. Verfahren nach Anspruch 4, **dadurch gekennzeichnet, dass** als Fahrpedalausgangswert ein aktuell gemessener Positionswert festgelegt wird, wenn der aktuell gemessene Positionswert größer als der unmittelbar vorher gemessene Positionswert ist.

7. Verfahren nach Anspruch 4, **dadurch gekennzeichnet, dass** als Fahrpedalausgangswert ein aktuell gemessener Positionswert festgelegt wird, wenn der aktuell gemessene Positionswert größer als ein zwei oder mehr Messungen zuvor gemessener Positionswert ist.

8. Verfahren nach Anspruch 4, **dadurch gekennzeichnet, dass** als Fahrpedalausgangswert ein aktuell gemessener Positionswert festgelegt wird, wenn der aktuell gemessene Positionswert um eine vorgegebene Differenz größer als ein zwei oder mehr Messungen zuvor gemessener Positionswert ist.

9. Verfahren nach Anspruch 4, **dadurch gekennzeichnet, dass** der Fahrpedalausgangswert einem vorbestimmten Standardwert zurückgesetzt wird, wenn das Fahrpedal (2) die Leerlaufstellung erreicht.

10. Verfahren nach Anspruch 4, **dadurch gekennzeichnet, dass** als Fahrpedalausgangswert ein aktuell gemessener Positionswert festgelegt wird, wenn die Differenz, die ein aktuell gemessener Positionswert kleiner ist als der ein, zwei oder mehr Messungen zuvor gemessene Positionswert und einen vorgegebenen Schwellwert unterschreitet.

## Claims

1. Method for changing the triggering threshold value of a brake stand-by function of a vehicle brake, wherein the brake stand-by function generates a brake pressure in wheel brakes without activation of a brake pedal (3), **characterized in that** a triggering threshold value for the brake stand-by function is determined by means of the following steps:
a) detection of an average return speed of an accelerator pedal (2); and
b) changing of the triggering threshold value for the brake stand-by function in dependence on the detected average return speed of the accelerator pedal (2).

2. Method according to Claim 1, **characterized in that** the triggering threshold value is increased if the average return speed is higher than a first limiting value.

3. Method according to Claim 1, **characterized in that** the triggering threshold value is decreased if the average speed is lower than a second limiting value.

4. Method for changing the triggering threshold value of a brake stand-by function of a vehicle brake, wherein the brake stand-by function generates a brake pressure in wheel brakes without activation of a brake pedal (3), **characterized in that** a triggering threshold value for the brake stand-by function is determined by means of the following steps:
a) repeated measurement of a position value which corresponds to the position of an accelerator pedal;
b) comparison of a currently measured position value of the accelerator pedal with a position value which was measured before;
c) definition of a specific position value as the initial value of the accelerator pedal, wherein the definition is carried out according to predefined rules; and
d) changing of the triggering threshold value for the brake stand-by function in dependence on the initial value of the accelerator pedal.

5. Method according to Claim 4, **characterized in that** the repeated measurement is carried out on a regular basis.

6. Method according to Claim 4, **characterized in that** a currently measured position value is defined as the initial value of the accelerator pedal if the currently measured position value is higher than the position value which was measured immediately before.

7. Method according to Claim 4, **characterized in that** a currently measured position value is defined as the initial value of the accelerator pedal if the currently measured position value is higher than a position value which was measured two or more measurements before.

8. Method according to Claim 4, **characterized in that** a currently measured position value is defined as the initial value of the accelerator pedal if the currently measured position value is higher, by a predefined difference, than a position value which was measured two or more measurements before.

9. Method according to Claim 4, **characterized in that** the initial value of the accelerator pedal is reset to a predetermined standard value when the accelerator pedal (2) reaches the idle travel position.

10. Method according to Claim 4, **characterized in that** a currently measured position value is defined as the initial value of the accelerator pedal if the difference by which a currently measured position value is lower than the position value measured one, two or more measurements before and drops below a predefined threshold value.

## Revendications

1. Procédé permettant de changer la valeur seuil de déclenchement d'une fonction de pré-freinage d'un frein de véhicule, la fonction de pré-freinage produisant une pression de freinage dans les freins de roue sans actionnement d'une pédale de frein (3), **caractérisé en ce qu'**une valeur seuil de déclenchement de la fonction de pré-freinage est déterminée au moyen des étapes suivantes :
a) détermination d'une vitesse de reprise moyenne d'une pédale d'accélérateur (2) ; et
b) modification de la valeur seuil de déclenchement de la fonction de pré-freinage en fonction de la vitesse de reprise moyenne constatée de la pédale d'accélérateur (2).

2. Procédé selon la revendication 1, **caractérisé en ce que** la valeur seuil de déclenchement est majorée lorsque la vitesse de reprise moyenne est supérieure à une première valeur limite.

3. Procédé selon la revendication 1, **caractérisé en ce que** la valeur seuil de déclenchement est réduite lorsque la vitesse moyenne est inférieure à une deuxième valeur limite.

4. Procédé permettant de changer la valeur seuil de déclenchement d'une fonction de pré-freinage d'un frein de véhicule, la fonction de pré-freinage engendrant une pression de freinage dans les freins de roue sans actionnement d'une pédale de frein (3), **caractérisé en ce qu'**une valeur seuil de déclenchement de la fonction de pré-freinage est déterminée au moyen des étapes suivantes :
a) mesure répétée d'une valeur de position correspondant à la position d'une pédale d'accélérateur ;
b) comparaisons d'une valeur de position actuelle mesurée de la pédale d'accélérateur avec une valeur de position précédemment mesurée ;
c) détermination d'une valeur de position définie sous la forme d'une valeur de sortie de pédale, la détermination étant réalisée en fonction de règles prédéfinies ; et
d) modification de la valeur seuil de déclenchement de la fonction de pré-freinage en fonction de la valeur de sortie de la pédale d'accélérateur.

5. Procédé selon la revendication 4, **caractérisé en ce que** la mesure est répétée à intervalles réguliers.

6. Procédé selon la revendication 4, **caractérisé en ce que** la valeur de sortie de la pédale d'accélérateur est une valeur de position mesurée en temps réel lorsque la valeur de position mesurée en temps réel est supérieure à la valeur de position mesurée juste avant.

7. Procédé selon la revendication 4, **caractérisé en ce que** la valeur de sortie de pédale d'accélérateur est déterminée comme la valeur de position mesurée en temps réel lorsque la valeur de position mesurée en temps réel est supérieure à une, deux ou plusieurs mesures de la valeur de position précédemment mesurée.

8. Procédé selon la revendication 4, **caractérisé en ce que** la valeur de sortie de pédale d'accélérateur est une valeur de position mesurée en temps réel lorsque la valeur de position mesurée en temps réel est supérieure à une différence préalablement prévue par rapport à une, deux ou plusieurs mesures de valeurs de position précédemment mesurées.

9. Procédé selon la revendication 4, **caractérisé en ce que** la valeur de sortie de pédale d'accélérateur est ramenée à une valeur standard prédéfinie lorsque la pédale d'accélérateur (2) atteint la position de marche à vide.

10. Procédé selon la revendication 4, **caractérisé en ce que** la valeur de sortie de pédale d'accélérateur est une valeur de position mesurée en temps réel lorsque la différence de la valeur de position mesurée en temps réel est inférieure à une, deux ou plusieurs mesures d'une valeur de position précédemment mesurée et passe en dessous d'une valeur seuil prédéfinie.
